# DEMANDE DE BREVET EUROPEEN

(11) **EP 2 196 355 A1**
(43) Date de publication de la demande: **16.06.2010**
(21) Numéro de dépôt: 09306222.2
(22) Date de dépôt: 14.12.2009
(51) Int. Cl.: B60N 2/22

(54) **Dispositif de verrouillage d'une partie de dossier d'un siège de véhicule automobile sur une partie structurelle du véhicule, et véhicule correspondant**

(30) Priorité: 12.12.2008 FR 0858519
(71) Demandeur: Wagon Automotive, 78990 Elancourt (FR)
(72) Inventeur: Nevado, Xavier, 75016 Paris (FR)
(74) Mandataire: Blot, Philippe Robert Emile

(57) **Abrégé**

Ce dispositif comprend un verrou (20) comprenant des moyens de fixation (30) sur la partie de dossier et un pêne de verrouillage (34) d'un élément d'ancrage (36) solidaire de la partie structurelle (12) du véhicule (4) mobile entre une position de verrouillage de l'élément d'ancrage (36) et une position de libération de l'élément d'ancrage (36). Le dispositif comprend un système d'actionnement à distance (22) du verrou comprenant un actionneur à distance et comprenant un organe de déverrouillage à distance (108) mobile entre une position inactive et une position de déverrouillage du verrou (20), l'organe de déverrouillage étant apte à être monté sur ladite partie structurelle. Le système comprend des moyens d'entraînement (112) reliant l'actionneur à distance avec l'organe de déverrouillage.

## Description

La présente invention concerne un dispositif de verrouillage d'une partie de dossier d'un siège de véhicule automobile sur une partie structurelle du véhicule, du type comprenant :
- un verrou comprenant des moyens de fixation sur la partie de dossier, et un pêne de verrouillage d'un élément d'ancrage solidaire de la partie structurelle du véhicule, le pêne de verrouillage étant mobile entre une position de verrouillage de l'élément d'ancrage et une position de libération de l'élément d'ancrage ; et
- un système d'actionnement à distance du verrou, le système d'actionnement à distance comprenant un actionneur à distance du verrou.

On connaît des dispositifs de verrouillage de ce type dans lequel le système d'actionnement à distance comprend une palette d'actionnement montée sur la structure du véhicule et reliée au verrou par un câble d'actionnement cheminant à l'intérieur du siège.

Néanmoins, ce dispositif de verrouillage est complexe et d'un coût relativement élevé.

Un but de l'invention est de fournir un dispositif de verrouillage simple, dont le coût est relativement faible.

A cet effet, l'invention a pour objet un dispositif de verrouillage du type précité, **caractérisé en ce que** le système d'actionnement à distance (22) comprend :
- un organe de déverrouillage à distance mobile entre une position inactive dans laquelle le pêne de verrouillage peut être amené dans sa position de verrouillage, et une position de déverrouillage du verrou dans laquelle le pêne de verrouillage peut être amené dans sa position de libération, l'organe de déverrouillage étant apte à être monté sur ladite partie structurelle du véhicule ou sur un élément solidaire de ladite partie structurelle ; et
- des moyens d'entraînement reliant l'actionneur à distance avec l'organe de déverrouillage, l'actionneur à distance étant apte à déplacer l'organe de déverrouillage de sa position inactive à sa position de déverrouillage par l'intermédiaire des moyens d'entraînement.

Suivant des modes particuliers de réalisation, le dispositif de verrouillage selon l'invention comporte une ou plusieurs des caractéristiques suivantes, prise(s) isolément ou selon l'une quelconque des combinaisons techniquement possibles :
- l'organe de déverrouillage est mobile entre une pluralité de positions inactives distinctes, cette pluralité de positions inactives définissant une plage inactive dans laquelle l'organe de déverrouillage peut être amené dans sa position de verrouillage ;
- ledit organe de déverrouillage est mobile entre une pluralité de positions distinctes de déverrouillage du verrou, cette pluralité de positions de déverrouillage définissant une plage de déverrouillage dans laquelle le pêne de verrouillage est dans une position de libération ;
- l'organe de déverrouillage est un levier monté mobile en rotation entre la ou chaque position inactive et la ou chaque position de déverrouillage ;
- l'organe de déverrouillage est un coulisseau monté coulissant entre la ou chaque position inactive et la ou chaque position de déverrouillage ;
- les moyens d'entraînement comprennent un câble d'entraînement ;
- le câble d'entraînement est enroulé autour de l'axe de rotation du levier et comprend de préférence une extrémité solidaire du levier ;
- le verrou comporte en outre un organe de blocage du pêne de verrouillage, l'organe de blocage étant mobile entre une position de blocage du pêne de verrouillage dans sa position de verrouillage, et une position de déblocage du pêne de verrouillage dans laquelle le pêne de verrouillage peut être amené de sa position de verrouillage à sa position de libération ;
- l'organe de déverrouillage présente une surface de came apte à coopérer avec une surface de suiveur de came de l'organe de blocage et ces deux surfaces étant apte à déplacer par coopération l'organe de blocage de sa position de blocage à sa position de déblocage lors du déplacement de l'organe de déverrouillage de sa position inactive à sa position de déverrouillage ;
- l'organe de blocage est monté rotatif entre sa position de blocage et sa position de libération du pêne de verrouillage, l'organe de déverrouillage étant de préférence monté rotatif entre la ou chaque position inactive et la ou chaque position de déverrouillage autour d'un axe de rotation qui est incliné, et est de préférence perpendiculaire, à l'axe de rotation de l'organe de blocage ; et
- le dispositif de verrouillage comprend un système d'actionnement supplémentaire apte à être fixé à ladite partie de dossier, comprenant un actionneur de déverrouillage supplémentaire apte à être disposé sur ladite partie de dossier , par exemple une palette d'actionnement.

L'invention a également pour objet un véhicule automobile comprenant une partie structurelle de véhicule automobile comprenant un élément d'ancrage, par exemple une gâche, le véhicule comprenant un siège comprenant une partie de dossier mobile par rapport à ladite partie structurelle, **caractérisé en ce que** le véhicule comporte un dispositif de déverrouillage tel que défini ci-dessus, le verrou étant disposé sur ladite partie de dossier et l'organe de déverrouillage du système d'actionnement à distance étant disposé sur ladite partie structurelle ou sur un élément solidaire de ladite partie structurelle.

Suivant un mode particulier de réalisation, le véhicule selon l'invention comprend une garniture masquant au moins partiellement la partie structurelle et masquant au moins partiellement l'organe de déverrouillage dans sa position inactive.

L'invention sera mieux comprise à la lecture de la description qui va suivre, donnée uniquement à titre d'exemple, et faite en se référant aux dessins annexés, sur lesquels :
- la figure 1 est une vue latérale en élévation de l'intérieur de la caisse d'un véhicule automobile selon l'invention, illustrant notamment un dispositif de verrouillage selon l'invention d'une partie de dossier d'un siège, sur la caisse du véhicule, le dispositif comprenant un verrou prévu sur la partie de dossier et un système d'actionnement à distance prévu sur la caisse ;
- la figure 2 est une vue schématique agrandie du dispositif de verrouillage de la figure 1, en configuration verrouillée du dispositif, dans laquelle une partie du boîtier du verrou n'est pas illustré ;
- la figure 3 est une vue analogue à la figure 2, en configuration déverrouillée du dispositif ;
- la figure 4 est une vue analogue à la figure 2 d'un deuxième mode de réalisation de l'invention, en configuration déverrouillée du dispositif ;
- la figure 5 est une vue analogue à la figure 3 de la variante de réalisation illustrée sur la figure 4, en configuration déverrouillée du dispositif ; et
- la figure 6 est une vue analogue aux figures 2 et 4 d'un autre mode de réalisation selon l'invention.

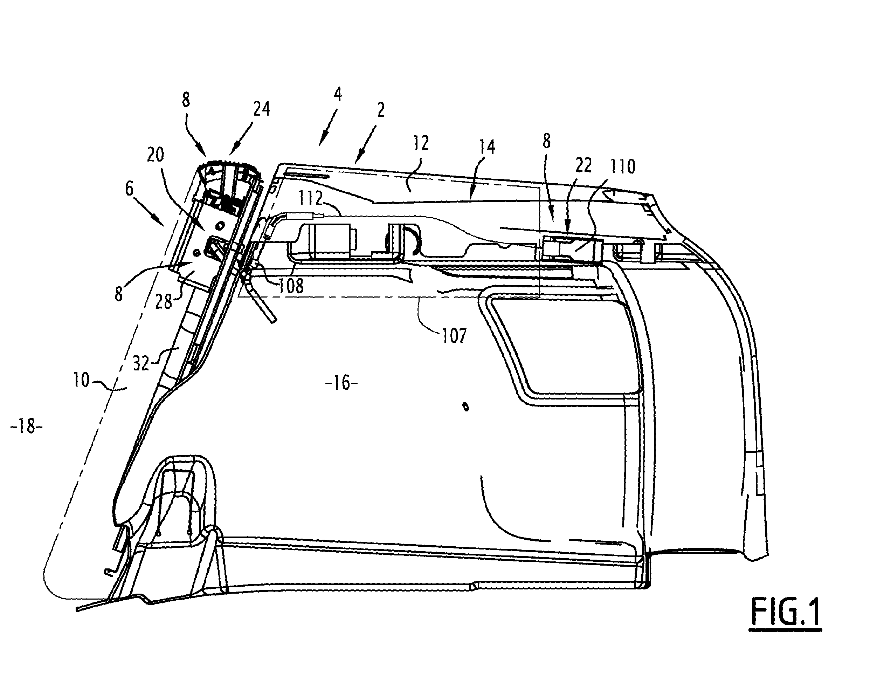

La figure 1 illustre une partie arrière 2 d'un véhicule automobile 4. La partie arrière 2 comprend un siège 6 (représenté schématiquement en traits mixtes sur la figure 1), et un dispositif de verrouillage 8 d'une partie de dossier 10 du siège 6 sur une partie structurelle 12 de la caisse 14 du véhicule 4.

Le siège 6 est un siège arrière, par exemple une banquette arrière, comprenant une partie d'assise (non représentée) sur laquelle la partie de dossier 10 est articulée entre une position d'ouverture, grossièrement verticale (figure 1), légèrement inclinée vers l'arrière, et une position d'assise, grossièrement horizontale. La position d'ouverture correspond à une configuration d'ouverture entre un coffre 16 et un habitacle 18 du véhicule 4, tandis que la position d'assise correspond à une configuration d'assise sur le siège 6.

Le dispositif de verrouillage 8 comprend un verrou 20 solidaire de la partie de dossier 10 et adapté pour verrouiller la partie de dossier 10 sur la partie structurelle 12, un système d'actionnement à distance 22 du verrou 20, et un système d'actionnement supplémentaire 24 intégré au siège 6.

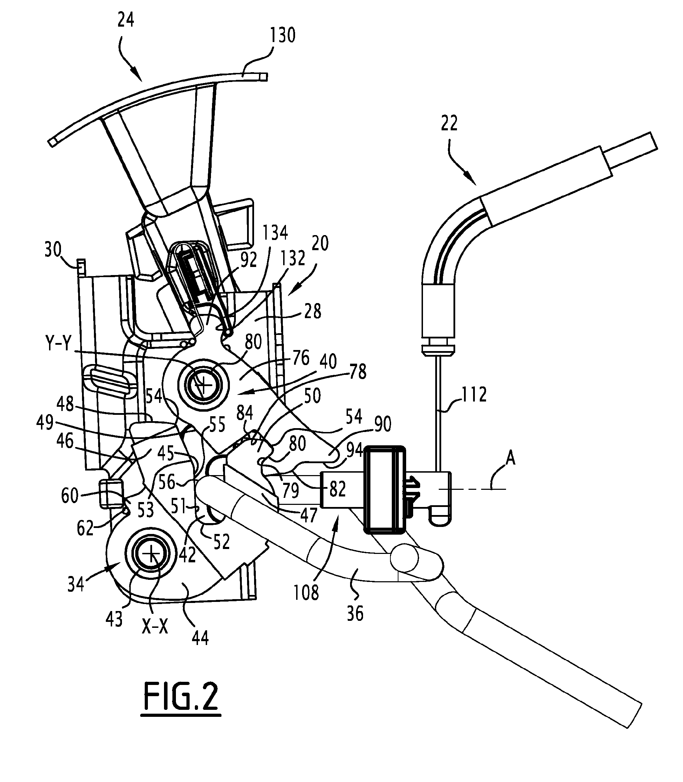

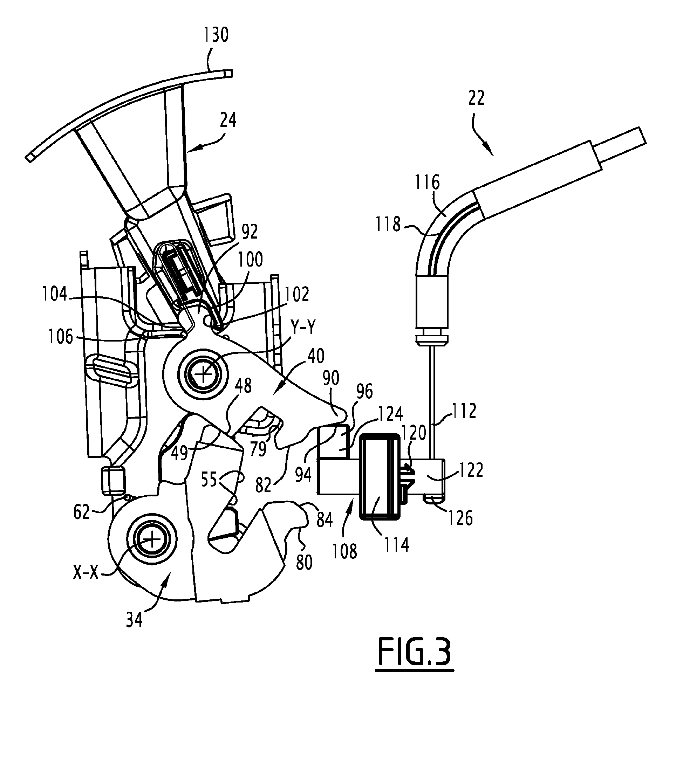

Comme illustré sur les figures 1 à 3, le verrou 20 comprend un boîtier 28 muni de moyens de fixation 30 (figures 2 et 3) sur une structure 32 (figure 1) de la partie de dossier 10, et un pêne de verrouillage 34 mobile entre une position de verrouillage d'une gâche d'ancrage 36 de la partie structurelle 12, et une position de libération de la gâche d'ancrage 36. Le pêne 34 est mobile en rotation entre ses positions de verrouillage et de libération autour d'un axe X-X.

Dans la position de verrouillage du pêne 34, la partie de dossier 10 est verrouillée dans sa position d'assise sur la partie structurelle 12.

Dans la position de libération du pêne 34, la partie de dossier 10 peut être rabattue dans sa position d'ouverture.

La gâche d'ancrage 36 est par exemple un arceau en acier par exemple soudé sur le reste de la partie structurelle 12.

Le verrou 20 comprend également un cliquet 40 de blocage du pêne 34, mobile entre une position de blocage du pêne 34 dans sa position de verrouillage, et une position de déblocage du pêne 34. Dans la position de blocage, le pêne 34 peut être déplacé entre sa position de verrouillage et sa position de libération, et le pêne 34 est retenu en butée dans sa position de libération.

En outre, le verrou 20 comprend une pièce en élastomère ou équivalent 42 contre laquelle la gâche 36 est en appui, lorsque le pêne 34 est dans la position de verrouillage et lorsque la gâche 36 est retenue par le pêne 34.

Le boîtier 28 est formé par deux plaques s'étendant de part et d'autre du pêne 34 et du cliquet 40.

Les moyens de fixation 30 sont par exemple formés par des orifices filetés prévus pour recevoir des vis de fixation du verrou 20 sur la structure 32 de la partie de dossier 10 du siège 6.

Le pêne 34 est monté mobile en rotation sur le boîtier 28 entre sa position de verrouillage (figure 2) et sa position de libération (figure 3) de la gâche 36. Le pêne 34 est sollicité élastiquement vers et jusqu'à sa position de libération, par exemple par un ressort de torsion 43.

Le pêne 34 comprend un corps 44 présentant une fente 45 de réception de la gâche 36. Le pêne 34 comprend une branche de retenue 46 et une branche de blocage 47 formant entre elles la fente 45. Le ressort de torsion 43 est monté entre le boîtier 28 et le corps 44 du pêne 34.

La branche de retenue 46 est adaptée pour retenir le pêne 34 en position de libération, et la branche de blocage 47 est adaptée pour bloquer le pêne 34 en position de verrouillage.

La branche de retenue 46 présente une surface de butée 48 apte à coopérer avec une surface de butée correspondante 49 du cliquet 40 pour retenir le pêne 34 en butée dans sa position de libération, à l'encontre des moyens de sollicitation élastiques formés par le ressort de torsion 43.

La branche de blocage 47 comprend, à son extrémité, une tête de blocage 50 apte à coopérer avec le cliquet 40 pour bloquer le pêne 34 dans sa position de verrouillage.

La fente 45 comprend d'une part un tronçon allongé de largeur constante 51 formant un fond 52 de la fente 45, et dans lequel la gâche 36 est reçue, en position de verrouillage du pêne 34, et d'autre part un tronçon divergent 53 s'élargissant vers l'extérieur du corps 44.

Le tronçon divergent 53 prolonge le tronçon allongé 51 et forme une extrémité externe 54 de la fente 45. Le tronçon divergent 53 est adapté pour guider la gâche 36 vers le tronçon allongé 51 lorsque le verrou 20 est amené dans sa configuration verrouillée.

La fente 45 présente une surface de suiveur de came 55 apte à coopérer avec une surface de came 56 formée par la gâche 36 pour déplacer le corps 44 du pêne de verrouillage 34 de sa position de libération vers et jusqu'à sa position de verrouillage lorsque la partie de dossier 10 est déplacée jusqu'à sa position d'assise. La surface de suiveur de came 55 s'étend sur le tronçon divergent 53 et sur le tronçon allongé 51.

En position de verrouillage, la gâche 36 est en appui contre la pièce en élastomère 42 et déforme cette pièce 42.

Le corps 44 du pêne 34 présente en outre un relief de butée 60 apte à coopérer avec une butée 62 solidaire du boîtier 28 pour limiter la course du pêne 34 dans la position de verrouillage.

Le cliquet 40 est monté mobile en rotation sur le boîtier 28 autour d'un axe Y-Y entre sa position de blocage et sa position de déblocage du pêne 34.

Le cliquet 40 comprend un corps 76 présentant une encoche 78 de blocage du pêne 34. L'encoche 78 reçoit et bloque la tête de blocage 50 du pêne 34, lorsque le pêne 34 est dans la position de verrouillage et lorsque le cliquet 40 est dans sa position de blocage. A cet effet, l'encoche 78 présente une surface de blocage 79 contre laquelle une surface de blocage 80 correspondante de la tête 50 est maintenue par sollicitation élastique de la pièce en élastomère 42 et du ressort de torsion 43.

Le corps 76 présente en outre une surface de suiveur de came 82 apte à coopérer avec une surface de came 84 prévue sur la tête de blocage 50 pour déplacer le cliquet 40 vers sa position de déblocage, et permettre la pénétration de la tête de blocage 72 dans l'encoche 78 lorsque le pêne 34 est déplacé de sa position de libération à sa position de verrouillage.

Le cliquet 40 est sollicité vers sa position de blocage par un ressort de torsion 80 monté entre le boîtier 28 et le corps 76 du cliquet 40.

En outre, le corps 76 du cliquet 40 comprend une première excroissance 90 et une deuxième excroissance 92 d'actionnement du cliquet 40.

La première excroissance 90 est une excroissance d'actionnement à distance 90 coopérant avec le système d'actionnement à distance 22 et la deuxième excroissance est une excroissance d'actionnement direct 92 coopérant avec le système d'actionnement supplémentaire 22 intégré au siège 6.

L'excroissance d'actionnement à distance 90 fait saillie à l'extérieur du boîtier 28, dans la position de blocage et dans la position de déblocage du cliquet 40.

L'excroissance d'actionnement à distance 90 est formée, par rapport au véhicule 4, à l'arrière du corps 76. L'excroissance d'actionnement à distance 90 présente une surface de suiveur de came 94 apte à coopérer avec une surface de came 96 (figure 3) du système d'actionnement à distance 22 pour déplacer le cliquet 40 de sa position de blocage à sa position de déblocage du pêne 34.

L'excroissance d'actionnement direct 92 est formée, par rapport au véhicule 4, à une extrémité supérieure du corps 76.

L'excroissance d'actionnement direct 92 présente une surface de suiveur de came 100 apte à coopérer avec une surface de came 102 prévue sur le système d'actionnement intégré 24 pour déplacer le cliquet 40 de sa position de blocage à sa position de déblocage.

L'excroissance d'actionnement direct 92 forme en outre un relief de butée 104 apte à coopérer avec une butée 106 solidaire du boîtier 28 pour limiter en butée le cliquet 40 dans sa position de déblocage, à l'encontre de l'action du pêne 34 sur le cliquet 40.

Le système d'actionnement à distance 22 est masqué au moins partiellement par une garniture de coté de caisse 107 (figure 1) fixée sur la partie structurelle 12.

Le système d'actionnement à distance 22 comprend un levier de déverrouillage 108, une palette d'actionnement à distance 110 (figure 1) du levier 108, et un câble d'entraînement 112 reliant la palette 110 au levier 108.

Le système d'actionnement à distance 22 comprend en outre un boîtier 114 de support du levier 108 et une gaine 116 délimitant un conduit de guidage 118 du câble 112.

Le boîtier de support 114 comprend des moyens de fixation 120 sur la partie structurelle 12, par exemple par encliquetage, comme illustré sur les figures 2 et 3.

Le levier 108 est monté rotatif sur le boîtier de support 114. Le levier 108 est mobile en rotation par rapport à la partie structurelle 12 autour d'un axe A, entre une pluralité de positions inactives définissant une plage inactive dans laquelle le levier 108 est espacé du cliquet 40 et dans laquelle le pêne 34 peut être amené dans sa position de verrouillage, et une pluralité de positions de déverrouillage définissant une plage de déverrouillage dans laquelle le cliquet 40 est dans sa position de déblocage et dans laquelle le pêne 34 peut être amené dans sa position de libération par le ressort 43.

Dans les positions inactives du levier 108, le cliquet 40 peut être amené dans sa position de blocage et dans sa position de déblocage, et le pêne 34 peut être amené dans sa position de verrouillage et dans sa position de libération, par exemple par le système d'actionnement supplémentaire 24.

Le levier de déverrouillage 108 est sollicité par un ressort de torsion (non représenté) monté entre le boîtier de support 114 et le levier 108.

Le levier 108 comprend une broche 122 ayant pour axe l'axe de rotation **A** du levier 108, et un doigt d'actionnement 124 s'étendant radialement par rapport à l'axe de la broche 122.

Le doigt 124 est prévu sur l'extrémité de la broche 122 s'étendant en regard du verrou 20.

Le doigt 124 a une forme allongée, par exemple parallélépipédique, et forme la surface de came 96 apte à déplacer le cliquet 40 de sa position de blocage à sa position de déblocage.

Le levier 108 est avantageusement réalisé en une seule pièce.

Le câble d'entraînement 112 comprend une extrémité 126 solidaire de la broche 122, de préférence au niveau de l'extrémité de la broche 122 opposée au doigt 124. Le câble 112 est apte à entraîner la broche 122. en rotation autour de l'axe A

La gaine 116 est fixée sur la partie structurelle 12 de la caisse 14 du véhicule 4.

Dans l'exemple illustré, la partie structurelle 12 est un côté de caisse de véhicule 4.

Le système d'actionnement supplémentaire 24 est de type connu. Il comprend une palette d'actionnement 130 montée en prise sur l'excroissance d'actionnement supplémentaire 92.

La palette d'actionnement supplémentaire 130 est située sur la partie d'extrémité supérieure de la partie de dossier 10.

La palette 130 est montée rotative autour d'un axe de rotation parallèle et espacé de l'axe de rotation Y-Y du cliquet 40, et suit le mouvement de rotation du cliquet 40 lors de sa rotation entre sa position de blocage et sa position de déblocage. La palette 130 est ainsi mobile entre une position verrouillée correspondant à la position de blocage du cliquet 40 et une position déverrouillée correspondant à la position de déblocage du cliquet 40.

La surface de came 102 est prévue sur la palette 130 et la surface de suiveur de came 100 est prévue sur l'excroissance 90, pour déplacer le cliquet 40 entre sa position de blocage et sa position de déblocage par rotation de la palette 130 entre une position verrouillée et sa position déverrouillée.

Lorsque le levier de déverrouillage 108 est dans l'une de ses positions inactives, la palette 130 peut déplacer le cliquet 40 entre sa position de blocage et sa position de déblocage.

Le fonctionnement du dispositif de verrouillage 8 va maintenant être décrit.

En configuration d'assise de la partie de dossier 10, le verrou 20 est verrouillé sur la gâche 36 de la partie structurelle 12. Le pêne 34 est dans sa position de verrouillage, le cliquet 40 est dans sa position de blocage, le levier de déverrouillage 108 est dans l'une de ses positions inactives, et la gâche 36 est logée dans la fente 45 du pêne 34, en appui contre la pièce en élastomère 42.

Pour déverrouiller la partie de dossier 10 à distance, l'utilisateur actionne la palette 110 pour tirer le câble 112, le faire coulisser dans sa gaine 116, ainsi dérouler le câble de la broche 122 et déplacer le levier 108 en rotation autour de son axe A. Le levier 108 est ainsi amené dans l'une de ses positions de déverrouillage. Lors de ce mouvement, la surface de came 96 du doigt 124 agit en coopération avec la surface de suiveur de came 94 du cliquet 40 et déplace le cliquet 40 vers et jusqu'à sa position de déblocage, en butée contre la butée 106. La palette 130 suit le cliquet 40 et vient en position déverrouillée.

Le pêne 34 est alors débloqué et est déplaçable entre ses positions de verrouillage et de libération. Le ressort de torsion 43 déplace le pêne 34 jusqu'à sa position de libération de la gâche 36, en butée contre la surface 49 du cliquet 40.

Le verrou 20 et la partie de dossier 10 sont alors en configuration déverrouillée et la partie de dossier 10 peut être amenée dans sa position d'ouverture.

Le levier 108 peut être ramené dans l'une de ses positions inactives, par actionnement de la palette 110. Un ressort de torsion est par exemple monté entre le levier 108 et le boîtier 114 pour solliciter le levier 108 vers sa position inactive extrême.

Lorsque la partie de dossier 10 est ramenée dans sa position d'assise, et lorsque le levier 108 est dans l'une de ses positions inactives, le verrou 20 se verrouille automatiquement sur la gâche 36.

En effet, la surface de came 56 de la gâche 36 coopère avec la surface de suiveur de came 55 du pêne 34 et déplace le pêne 34 vers et jusqu'à sa position de verrouillage, en butée contre la butée 62.

Lors de ce mouvement, la surface de came 84 du pêne 34 coopère avec la surface de suiveur de came 82 du cliquet 40 et soulève le cliquet 40 vers sa position de déblocage pour permettre l'insertion de la tête de blocage 50 dans l'encoche de blocage 78. Le pêne 34 est alors bloqué dans sa position de verrouillage. La palette 130 est dans sa position verrouillée.

Le ressort de torsion 43 et la pièce en élastomère 42 sollicitent le pêne 34 en butée contre la surface de blocage 79 de l'encoche 78.

Pour ce qui concerne le système d'actionnement supplémentaire 24, son actionnement peut être effectué lorsque le levier 108 est en position inactive. L'actionnement de la palette 130 actionne directement le cliquet 40. Il suffit de déplacer la palette 130 dans sa position déverrouillée pour amener le cliquet 40 dans sa position de déblocage. Le déplacement du cliquet 40 dans sa position de blocage est quant à lui commandé par le ressort de torsion 58 et le pêne 34.

Le dispositif de verrouillage 8 selon l'invention présente l'avantage de fournir un système d'actionnement à distance 22 monté en dehors de la partie de dossier 10 et donc indépendant cinématiquement de la partie de dossier 10.

Le cheminement du câble 112 s'en trouve simplifié. Dans l'invention, le câble 112 est monté sur la partie structurelle 12. Le cheminement du câble 112 étant monté sur une pièce cinématique fixe, il est simple.

En outre, le cheminement du câble 112 est court.

La pluralité de positions de déverrouillage et la pluralité de positions inactives prévues pour le levier de déverrouillage 108 permettent d'adapter le dispositif de verrouillage 8 selon l'invention à des tolérances importantes de positionnement du siège 4.

Si les tolérances de fabrication permettent un défaut de positionnement du verrou 20 du siège 4 par rapport au reste du véhicule 4, et notamment par rapport à la partie structurelle 12, le dispositif de verrouillage 8 selon l'invention reste opérant.

Le montage rotatif de l'organe de déverrouillage 108 limite le débattement du câble 112.

Le montage du levier 108 autour d'un axe de rotation incliné, avantageusement perpendiculaire à l'axe de rotation Y-Y du cliquet 40, augmente les tolérances de positionnement du verrou 20 par rapport à la partie structurelle 12. En outre, la forme de surface de came 96 permise pour le levier 108 est simple.

En variante, l'une ou chaque palette d'actionnement 110 et 130 est remplacée par un bouton coulissant.

En variante encore, le boîtier 114 et/ou l'ensemble du système d'actionnement à distance 22, sont fixés sur l'élément de garniture 107, lui-même fixé sur la partie structurelle 12.

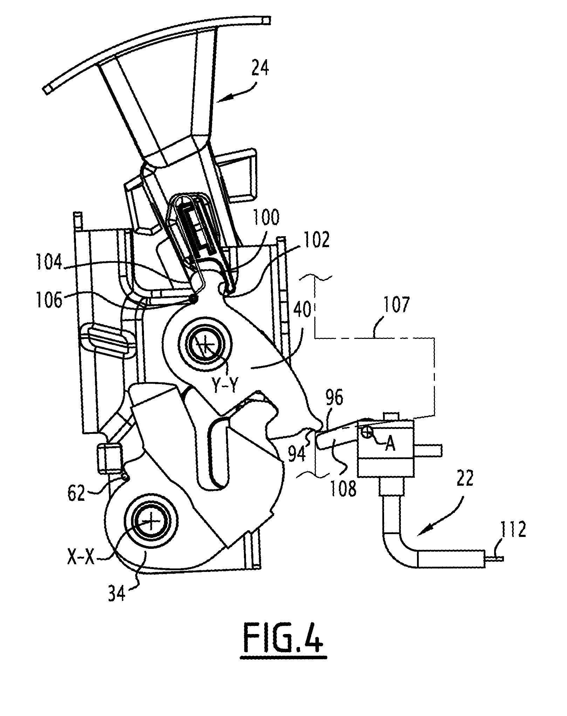

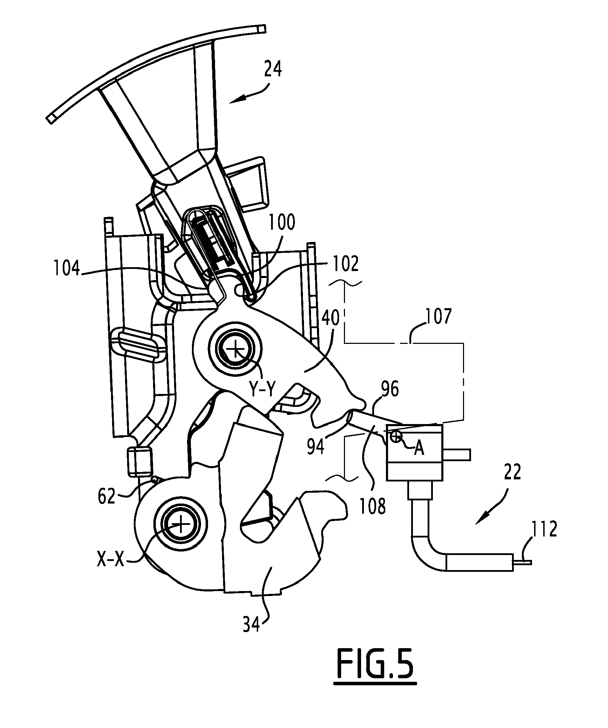

Les figures 4 et 5 illustrent un deuxième mode réalisation de l'invention dans lequel seules les différences par rapport au premier mode de réalisation seront décrites ci-dessous. Les numéros de référence identiques désignent des éléments analogues.

Le deuxième mode de réalisation diffère essentiellement du premier mode de réalisation de l'invention par le levier 108 de déverrouillage.

En effet, dans le deuxième mode de réalisation, le levier 108 est monté rotatif entre sa position inactive et sa position déverrouillée autour d'un axe de rotation A parallèle à l'axe de rotation Y-Y du cliquet 40.

Il en résulte un encombrement moindre du levier 108 dans le sens de l'axe A du mode de réalisation des figures 2 et 3.

En outre, le levier 108 est, dans sa plage de positions inactives, masqué par l'élément de garniture 107.

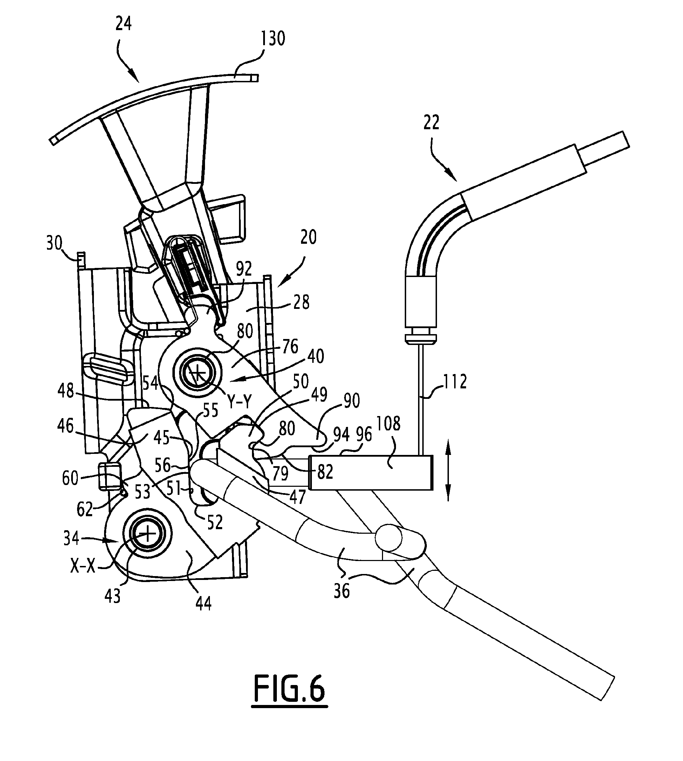

Dans un autre mode de réalisation, illustré sur la figure 6, dans lequel seules les différences par rapport au premier mode de réalisation sont décrites ci-dessous et dans laquelle les numéros de référence identiques désignent des éléments analogues, le levier est remplacé par un coulisseau 108 monté mobile en translation sur la partie structurelle 12 entre ses positions inactives et ses positions de déverrouillage.

## Revendications

1. Dispositif de verrouillage (8) d'une partie de dossier (10) d'un siège (6) de véhicule automobile (4) sur une partie structurelle (12) du véhicule (4), du type comprenant :
- un verrou (20) comprenant des moyens de fixation (30) sur la partie de dossier (10), et un pêne de verrouillage (34) d'un élément d'ancrage (36) solidaire de la partie structurelle (12) du véhicule (4), le pêne de verrouillage (34) étant mobile entre une position de verrouillage de l'élément d'ancrage (36) et une position de libération de l'élément d'ancrage (36) ; et
- un système d'actionnement à distance (22) du verrou (20), le système d'actionnement à distance (22) comprenant un actionneur à distance (110) du verrou (20),
**caractérisé en ce que** le système d'actionnement à distance (22) comprend :
. un organe de déverrouillage à distance (108) mobile entre une position inactive dans laquelle le pêne de verrouillage (34) peut être amené dans sa position de verrouillage, et une position de déverrouillage du verrou (20) dans laquelle le pêne de verrouillage (34) peut être amené dans sa position de libération, l'organe de déverrouillage (108) étant apte à être monté sur ladite partie structurelle (12) du véhicule (4) ou sur un élément solidaire (107) de ladite partie structurelle (12) ; et
. des moyens d'entraînement (112) reliant l'actionneur à distance (110) avec l'organe de déverrouillage (108), l'actionneur à distance (110) étant apte à déplacer l'organe de déverrouillage (108) de sa position inactive à sa position de déverrouillage par l'intermédiaire des moyens d'entraînement (112).

2. Dispositif de verrouillage (8) selon la revendication 1, dans lequel l'organe de déverrouillage (108) est mobile entre une pluralité de positions inactives distinctes, cette pluralité de positions inactives définissant une plage inactive dans laquelle l'organe de déverrouillage (108) peut être amené dans sa position de verrouillage.

3. Dispositif de verrouillage (8) selon la revendication 1 ou 2, dans lequel ledit organe de déverrouillage (108) est mobile entre une pluralité de positions distinctes de déverrouillage du verrou (20), cette pluralité de positions de déverrouillage définissant une plage de déverrouillage dans laquelle le pêne de verrouillage (34) est dans une position de libération.

4. Dispositif de verrouillage (8) selon l'une quelconque des revendications précédentes, dans lequel l'organe de déverrouillage (108) est un levier monté mobile en rotation entre la ou chaque position inactive et la ou chaque position de déverrouillage.

5. Dispositif de verrouillage (8) selon l'une quelconque des revendications 1 à 3, dans lequel l'organe de déverrouillage (108) est un coulisseau monté coulissant entre la ou chaque position inactive et la ou chaque position de déverrouillage.

6. Dispositif de verrouillage (8) selon l'une quelconque des revendications précédentes, dans lequel les moyens d'entraînement comprennent un câble d'entraînement (112).

7. Dispositif de verrouillage (8) selon la revendication 6 prise ensemble avec la revendication 4, dans lequel le câble d'entraînement (112) est enroulé autour de l'axe de rotation (A) du levier (108) et comprend de préférence une extrémité solidaire (126) du levier (108).

8. Dispositif de verrouillage (8) selon l'une quelconque des revendications précédentes, dans lequel le verrou (20) comporte en outre un organe de blocage (40) du pêne de verrouillage (34), l'organe de blocage (40) étant mobile entre une position de blocage du pêne de verrouillage (34) dans sa position de verrouillage, et une position de déblocage du pêne de verrouillage (34) dans laquelle le pêne de verrouillage (34) peut être amené de sa position de verrouillage à sa position de libération.

9. Dispositif de verrouillage (8) selon la revendication 8, dans lequel l'organe de déverrouillage (108) présente une surface de came (96) apte à coopérer avec une surface de suiveur de came (94) de l'organe de blocage (40) et ces deux surfaces (96, 94) étant apte à déplacer par coopération l'organe de blocage (40) de sa position de blocage à sa position de déblocage lors du déplacement de l'organe de déverrouillage (108) de sa position inactive à sa position de déverrouillage.

10. Dispositif de verrouillage (8) selon l'une quelconque des revendications 7 à 9 prises ensemble avec la revendication 4, dans lequel l'organe de blocage (40) est monté rotatif entre sa position de blocage et sa position de libération du pêne de verrouillage (34), l'organe de déverrouillage (108) étant de préférence monté rotatif entre la ou chaque position inactive et la ou chaque position de déverrouillage autour d'un axe de rotation (A) qui est incliné, et est de préférence perpendiculaire, à l'axe de rotation de l'organe de blocage (40).

11. Dispositif de verrouillage (8) selon l'une quelconque des revendications précédentes, comprenant un système d'actionnement supplémentaire (24) apte à être fixé à ladite partie de dossier (10), comprenant un actionneur de déverrouillage supplémentaire (130) apte à être disposé sur ladite partie de dossier (10), par exemple une palette d'actionnement (130).

12. Véhicule automobile (4), comprenant une partie structurelle (12) de véhicule automobile (4) comprenant un élément d'ancrage (36), par exemple une gâche (36), le véhicule (4) comprenant un siège (6) comprenant une partie de dossier (10) mobile par rapport à ladite partie structurelle (12),
**caractérisé en ce que** le véhicule (4) comporte un dispositif de déverrouillage (8) selon l'une quelconque des revendications précédentes, le verrou (20) étant disposé sur ladite partie de dossier (10) et l'organe de déverrouillage (108) du système d'actionnement à distance (22) étant disposé sur ladite partie structurelle (12) ou sur un élément solidaire (107) de ladite partie structurelle (12).

13. Véhicule (4) selon la revendication 12, comprenant une garniture (107) masquant au moins partiellement la partie structurelle (12) et masquant au moins partiellement l'organe de déverrouillage (108) dans sa position inactive.
